# EUROPÄISCHE PATENTSCHRIFT

(11) **EP 0 990 325 B1**
(45) Veröffentlichungstag und Bekanntmachung des Hinweises auf die Patenterteilung: **27.08.2003**
(21) Anmeldenummer: 98936339.5
(22) Anmeldetag: 15.06.1998
(51) Int. Cl.: H04L 1/22, G08G 5/00, G01S 7/00, G06F 11/00

(54) **VERFAHREN ZUR ÜBERWACHUNG VON DATENSTRÖMEN, INSBESONDERE ZUR RADAR-DATENVERSORGUNG VON FLUGSICHERUNGSSYSTEMEN UND VORRICHTUNG ZUR DURCHFÜHRUNG DES VERFAHRENS**
METHOD FOR MONITORING DATA FLOWS, SPECIALLY TO PROVIDE RADAR DATA FOR AIR TRAFFIC CONTROL SYSTEMS AND DEVICE TO IMPLEMENT SAID METHOD
PROCEDE DE SURVEILLANCE DE COURANTS DE DONNEES, EN PARTICULIER POUR L'APPROVISIONNEMENT EN DONNEES RADAR DE SYSTEMES DE CONTROLE DU TRAFIC AERIEN, ET DISPOSITIF POUR LA MISE EN OEUVE DUDIT PROCEDE

(30) Priorität: 16.06.1997 DE 19725370; 07.05.1998 DE 19820324
(43) Veröffentlichungstag der Anmeldung: 05.04.2000
(73) Patentinhaber: DFS Deutsche Flugsicherung GmbH, 63067 Offenbach am Main (DE)
(72) Erfinder: LANGBECKER, Werner, D-64390 Erzhausen (DE); SEJA, Werner, D-76337 Waldbronn (DE)
(74) Vertreter: KEIL & SCHAAFHAUSEN
(86) Internationale Anmeldenummer: EP9803580
(87) Internationale Veröffentlichungsnummer: WO98058470

(56) Entgegenhaltungen:
- EP-A- 0 584 918
- EP-A- 0 606 682
- US-A- 4 887 071
- CRISTIAN F ET AL: "FAULT-TOLERANCE IN AIR TRAFFIC CONTROL SYSTEMS" ACM TRANSACTIONS ON COMPUTER SYSTEMS, Bd. 14, Nr. 3, August 1996, Seiten 265-286, XP000638951
- DEBELACK A S ET AL: "NEXT GENERATION AIR TRAFFIC CONTROL AUTOMATION" IBM SYSTEMS JOURNAL, Bd. 34, Nr. 1, 1. Januar 1995, Seiten 63-77, XP000500283

## Beschreibung

Die Erfindung betrifft ein Verfahren zur Radar-Datenversorgung von Flugsicherungssystemen oder dgl., deren Kontrollzentralen über ein Netzwerk mit Radardaten versorgt werden, wobei die Einspeisung der Radaranlagen in das Netzwerk sowie die Auskopplung der Radardaten für die Flugsicherungssysteme aus dem Netzwerk über Netzwerkknoten erfolgt und wobei die Radardaten über Netzwerke zu integrierten Betriebssystemen und ggf. einem Backup-System weitergeleitet werden, sowie eine Vorrichtung zur Durchführung des Verfahrens.

Die europäischen Flugsicherungsorganisationen von Holland, Belgien, Luxemburg und Deutschland betreiben zusammen mit der Agentur EUROCONTROL ein Netzwerk zur Versorgung von Kontrollzentralen mit Radardaten (RADNET - Radar Data Network). Die Einspeisung der Radaranlagen in das RADNET, sowie die Auskopplung der Radardaten für die Flugsicherungssysteme aus dem RADNET erfolgt über Netzwerkknoten (RMCDE - Radar Message Conversion and Distribution Equipment). Die Weiterleitung der Radardaten erfolgt über Netzwerke zu den integrierten Betriebssystemen und ein Backup-System, das jedoch nur eine eingeschränkte Funktionalität bietet. Das Backup-System wird in Notfällen zusätzlich über eine Direktanbindung zu den Radarstationen mit Radardaten versorgt.

Die Versorgung einer Regionalstelle mit Radardaten erfolgt seit der Einführung des RADNET grundsätzlich auf zwei Wegen: Während die örtliche Radaranlage in Form eines Rundsichtradars am Flughafen (ASR - Airport Surveillance Radar) über den RMCDE direkt an das Darstellungssystem eingespeist wird, werden alle anderen Radaranlagen einer Radarstrecke über das RADNET zur Verfügung gestellt. Gegenüber dem vor der Einführung des RADNET üblichen Verfahren, wonach alle benötigten Radaranlagen direkt am jeweiligen Verarbeitungssystem eingespeist werden mußten, stellt dies bereits eine erhebliche Vereinfachung und damit auch eine Kostenersparnis dar.

Radardaten werden beim derzeitigen Verfahren für die Mittelund Weitbereichsradaranlagen an zwei voneinander unabhängigen Betriebsstätten der Deutschen Flugsicherung (DFS) eingespeist. Für die örtlichen Radaranlagen (ASR- Airport Surveillance Radar) erfolgt die Einspeisung an einer Stelle ("örtliche Einspeisung"). Damit ergibt sich für eine Regionalstelle, daß zusätzlich zur örtlichen ASR-Anlage weitere Streckenanlagen quasi "örtlich" eingespeist werden, wenn es sich hierbei um einen RADNET-Einspeisepunkt handelt.

Der Netzwerkknoten RMCDE besteht aus vier voneinander unabhängigen Kanälen, wobei jeder Kanal in der Lage ist, alle benötigten Radardaten zu verarbeiten. Jeweils zwei dieser Kanäle sind zu einer Einheit zusammengefaßt. Zwischen den beiden Einheiten kann nur manuell umgeschaltet werden, während innerhalb einer Einheit im Fehlerfall automatisch zwischen den Kanälen umgeschaltet wird. In der Vergangenheit gab es trotz der hohen Redundanz des RMCDE vereinzelt Probleme mit der Radarversorgung. Darüber hinaus besteht grundsätzlich das Problem eines Totalausfalls der Radarversorgung, der auch von der "Notversorgung" des bestehenden Backup-Systems nicht zufriedenstellend überbrückt werden kann und dies nicht nur, weil mit dem Backup-System nur Radardaten und keine Flugplandaten übermittelt werden können.

Es ist daher schon vorgeschlagen worden, das RMCDE-Konzept dahingehend zu ändern, daß die Netzwerkknoten in zwei unabhängige RMCDE's getrennt werden, nämlich einen RMCDE N (Netz) und einen RMCDE D (Direkt). Über den RMCDE N erfolgt die Verbindung in das RADNET, während alle direkt angeschlossenen Radaranlagen (RADNET Einspeisepunkte) über den RMCDE D angeschlossen werden. Beide RMCDE's geben ihre Daten gleichzeitig an zwei Netzwerke mit lokalem Ausdehnungsbereich (LAN-Local Area Network), insbesondere das Ethernet und FDDI ab. Somit stehen alle Radardaten entweder direkt oder über das Netz gleichzeitig und voneinander unabhängig dem Online-System und dem Backup-System zur Verfügung. Parallel hierzu werden alle direkt angeschlossenen Radaranlagen noch über sogenannte ADR's (All-Purpose-Data-Replicator) an das Backup-System angeschlossen. Bei einem Totalausfall aller RMCDE's (RMCDE D und N) erfolgt eine "Notversorgung" über das Backup-System. Dabei sind für die Auswertungen jedoch nur die für die RADNET-Einspeisung vorgesehenen Radaranlagen vorhanden. Eine Abdeckung des kompletten Luftraums einer Regionalstelle wird auf diesem Wege nicht erreicht. Dies wäre nur möglich, wenn zusätzlich zu den für die RADNET-Einspeisung notwendigen Radaranlagen weitere Radaranlagen für eine einfache Luftraumüberdeckung direkt geschaltet werden. Dieses hätte jedoch enorme Leitungskosten zur Folge. Außerdem müßte bei den bestehenden Radaranlagen die Anschlußkapazität erweitert werden, was insbesondere eine Schnittstellenvervielfachung zur Folge hätte.

Es wurden auch schon Überlegungen angestellt, aus Sicherheitsgründen die ADR's nicht im gleichen Raum, in dem schon die beiden RMCDE N und D installiert sind, aufzubauen, so daß, falls bei einem Brand beide RMCDE's ausfallen sollten, über die ADR's wenigstens eine Notversorgung des Systems mittels der direkt angeschlossenen Radaranlagen gewährleistet werden könnte. Das dabei bestehende Problem einer unzureichenden Radarüberdeckung ließe sich nur durch die Anmietung weiterer Leitungen überwinden, was mit erheblichen Kosten und Anschlußproblemen für die Radaranlagen verbunden wäre.

Um sowohl bei einem Totalausfall des Netzwerkknotens (RMCDE D und N) als auch bei einem Teilausfall des Netzwerkknotens (RMCDE D oder N) zumindest eine einfache Radarüberdeckung sicherzustellen, wird beim derzeitigen System daher der direkte Anschluß von entsprechend vielen Radaranlagen gefordert.

Das Backup-System verwendet ein PC-basiertes Radardaten Verarbeitungssystem ("TracView"), das jedoch keine Verbindung zur Flugplanverarbeitung ermöglicht. Der Anschluß von Radaranlagen über die ADR's an das Backup-System verursacht darüber hinaus hohe Investitionskosten und Mieten für die entsprechenden Leitungen, wenn mehr als die für die RADNET Einspeisung notwendigen Radaranlagen eingespeist werden. Eine einfache Radarüberdeckung des Luftraums ließe sich nur dann sicherstellen, wenn zusätzliche weiter entfernte Radaranlagen direkt angeschlossen würden.

Aufgabe der vorliegenden Erfindung ist es nun, ein Verfahren und eine Vorrichtung der eingangs genannten Art zur Verfügung zu stellen, mit denen Ausfälle In der Radar-Datenversorgung zu den Flugsicherungssystemen erkennt und automatisch eine Ersatzversorgung mit Radardaten sichergestellt wird. Insbesondere soll bei einem völligen Versagen der Einspeisung von Radardaten über die Netzwerkknoten RMCDE des RADNET innerhalb einer Zeitspanne, die eine Kontrolle des Luftverkehrs durchgängig ermöglicht, und ohne Verzicht auf einspeisende Radaranlagen ein ungestörter Betriebszustand wieder hergestellt werden.

Diese Aufgabe wird erfindungsgemäß durch die Merkmale des Anspruchs gelöst.

Damit wird selbst bei einem völligen Versagen der Einspeisung von Radardaten über die Netzwerkknoten RMCDE des RADNET innerhalb einer Zeitspanne, die eine Kontrolle des Luftverkehrs durchgängig ermöglicht, und ohne Verzicht auf einspeisende Radaranlagen ein ungestörter Betriebszustand wieder hergestellt. Ein wesentlicher Vorteil des erfindungsgemäßen Verfahrens besteht darin, daß die im Störfall betrieblich notwendigen Radardaten nur dann über automatische Wählverbindungen zur Verfügung gestellt werden, wenn ein entsprechender Bedarf besteht, statt die Radardaten 24 Stunden pro Tag für einen möglicherweise nie auftretenden Eventualfall vorzuhalten. Während überlicherweise für eine sichere Erkennung des Ausfalls einer Radaranlage ein Zeitraum von ein bis zwei Antennenumdrehungen (ca. 10 bis 20 Sekunden) benötigt wird, kann mit dem erfindungsgemäßen Verfahren der Ausfall aller über Netz angelieferten Radaranlagen schon im Sekundenraster sicher entdeckt werden. Das Verfahren erfordert dabei keine spezielle Infrastruktur von Flugsicherungssystemen, sondern arbeitet unabhängig von der eingesetzten Hardware.

Aus der EP 0 584 918 A ist bereits ein Verfahren bekannt, bei dem die Übertragung serieller Bitfolgen über ein Modem überwacht wird.

Auch bei dem in der EP 0 606 682 A beschriebenen Verfahren läßt sich die physikalische Unterbrechung von Leitungen feststellen.

Damit bei Systemfehlern eine Wiederkehr der Radardarstellung innerhalb von Sekunden erfolgen kann, ist erfindungsgemäß vorgesehen, daß die Meßwerte über mehrere Intervalle mit einstellbaren Parametern von z.B. 1 s gespeichert werden. Bei Flugsicherungssystemen hat es sich als vorteilhaft erwiesen, die Meßwerte über fünf Intervalle zu speichern.

Um eine komplette Radarüberdeckung innerhalb von Sekunden aufbauen zu können, erfolgt die Anwahl der Radaranlagen und die Übertragung der Radardaten über ISDN oder ein sonstiges, inbesondere satellitengestütztes Datennetz. Damit fallen Übertragungskosten nur im wirklichen Nutzungsfall an. Außerdem garantieren die systemimmanenten Redundanzen des ISDN-Netzwerks einen Übertragungsweg, dessen Ausfallsicherheit mit einer direkt geschalteten Leitung nicht erreicht werden kann.

In Weiterbildung dieses Erfindungsgedankens ist vorgesehen, daß die Daten der über ISDN oder ein anderes geeignetes Datennetz angewählten Radaranlagen in einem Überwachungsrechner (PC) angenommen und - unter vollständiger Umgehung des Netzwerkknotens (RMCDE) - sowohl in die Netzwerke, insbesondere Ethernet und FDDI, als auch in das Backup-System eingespeist werden.

Um sicherzustellen, daß die zur Radarüberdeckung erforderlichen Radaranlagen rechtzeitig angewählt und die Radardaten zur Verfügung gestellt werden, ist gemäß einer Ausgestaltung der Erfindung vorgesehen, daß die Überwachungslogik des Überwachungsrechners ständig den Radardatenfluß überprüft, daß die Überwachungslogik im Fall, daß der Datenfluß (Anzahl der Zielmeldungen pro Zeiteinheit = selbstlernender Schwellwert) unterbrochen wird, dies als Kriterium für einen ausgefaller Netzwerkknoten (RMCDE) bewertet und den Aufbau der Wählverbindungen über ISDN oder ein sonstiges Datennetz für alle ausgefallenen Radarinformationen startet.

Die Versorgung der Flugsicherungssysteme mit Radardaten erfolgt wie ausgeführt über Netzwerkknoten (RMCDE). Bei einem System, bei dem mehrere unabhängig voneinander arbeitende RMCDEs einen Netzwerkknoten bilden, d.h. die Netzwerkknoten aus einem oder mehreren unabhängig voneinander arbeitenden Knotenrechnern (RMCDEs) bestehen können, z.B. einen RMCDE N (Netz) zur Verbindung in das RADNET und einen RMCDE D (Direkt), über den alle direkt angeschlossenen Radaranlagen (RADNET Einspeisepunkte) angeschlossen sind, ist für die Dauer des Ausfalls eines RMCDE N und/oder RMCDE D erfindungsgemäß vorgesehen, daß die nachgeschalteten Radardarstellungssysteme über ISDN- oder sonstige Wählverbindungen von externen Netzwerkknoten (RMCDEs) oder Radaranlagen mit Ersatz-Radardaten versorgt werden. Damit stehen alle angeschlossenen Radaranlagen über Wählverbindungen (ISDN oder dgl.) dem Radardatenverarbeitungssystem innerhalb von Sekunden wieder zur Verfügung. In der Radardarstellung ist dabei kein Ausfall festzustellen. Online- und Backup-Systeme werden kontinuierlich mit Radardaten versorgt.

Falls der Netzwerkknoten RMCDE D ausfällt, werden gemäß einer weiteren Ausgestaltung der Erfindung für die Dauer des RMCDE-Ausfalls die direkt angeschlossenen Radaranlagen oder ein externer Netzwerkknoten (RMCDE) angewählt und die Radardaten vom Überwachungsrechner den Netzwerken, insbesondere das Ethernet und FDDI, über Schnittstellen zur Verfügung gestellt. Die Überwachung der Ausgänge des RMCDE D erfolgt dabei wie bei dem RMCDE N. Die Abläufe zum Verbindungsaufbau sind identisch und unterscheiden sich lediglich durch die Anwahl anderer Radaranlagen oder anderer RMCDEs. Die Radardaten können hierbei aber nicht mehr an den defekten RMCDE übergeben werden, sondern werden über Schnittstellen in die Netzwerke eingespeist.

Das erfindungsgemäße Verfahren läßt sich auch für die Überwachung des Datenflusses in einem bestimmten Zeitintervall verwenden. In diesem Fall erkennt das System den Unterschied zwischen einem Datenausfall und einem nicht überwachten Zeitraum.

Die zur Lösung der Aufgabe der vorliegenden Erfindung vorgesehene Vorrichtung zur Durchführung des Verfahrens besteht aus einem Netzwerk zur Versorgung von Kontrollzentraien mit Radardaten (RADNET), in das über Netzwerkknoten (RMCDE) die Radardaten der Radaranlagen eingespeist und die Radardaten für die Flugsicherungssysteme angekoppelt werden. Die Radardaten werden dabei über Netzwerke (Ethernet, FDDI) zu den integrierten Betriebssystemen und ggf. einem Backup-System weitergeleitet.

Flugsicherungssysteme ("Air traffic control Systems") sind bereits seit langem redundant ausgelegt, wobei auch die Netzwerkknoten, für die Ersatz geschaltet werden soll, redundant sind. Für die Aufrechterhaltung des Betriebszustandes ist es von eminenter Bedeutung, wie schnell ein Fehler erkannt und behoben werden kann. Bei einem aus der Druckschrift: Cristian F. et al., "Fault-Tolerance in Air Traffic Control Systems", ACM Transactions on Computer Systems, Bd. 14, Nr. 3, August 1996, Seiten 265-286, bekannten "Air Traffic Control System" wird ein Ausfall durch das Ausbleiben der Bestätigung einer vom Sender ausgesandten Meldung erkannt.

Um daher im Falle eines Ausfalls der Radar-Datenversorgung einen ungestörten Betriebszustand ohne Verzicht auf einspeisende Radaranlagen und ohne den Notbetrieb des Backup-Systems in einer Zeitspanne, die sich aus den strengen Anforderungen an das zeitliche Reaktionsverhalten des Systems ergeben, wieder herzustellen, ist erfindungsgemäß vorgesehen, daß die Vorrichtung aus einem Fehlererkennungssystem (System ARTE - Automatic Radardata Transmission Equipment) besteht, das einen Überwachungsrechner aufweist, der die Radardaten nach den Netzwerkknoten (RMCDE) auf den systeminternen Netzwerken des Flugsicherungssystem erfaßt, daß der Überwachungsrechner in Perioden die Anzahl der eingehenden Zielmeldungen vergleicht, daß das Fehlererkennungssystem einen mittels eines FIFO-Puffers gebildeten Mittelwert der Radardaten als Eingangswert für eine Empfindlichkeitskurve verwendet, die ein Zeitfenster zum periodischen Vergleich der summierten Radardaten für einen Fehler-Detektor generiert, und daß der Überwachungsrechner im Fehlerfall, insbesondere bei einem völligen Ausfall der Radar-Zielmeldungen, eine Gegenstelle am Netzwerk (RADNET), bzw. eine oder mehrere Radaranlagen über ISDN oder sonstiges Datennetz anwählt und dem Flugsicherungssystem zusätzlich benötigte Radardaten, insbesondere Radar-Zielmeldungen, zuschaltet. Mit einer derartigen Vorrichtung läßt sich die Qualität der Radar-Datenversorgung bei gleichzeitiger Kostensenkung deutlich erhöhen. Auch läßt sie sich leicht an die betrieblichen Erfordernisse anpassen und kostengünstig realisieren. Zur günstigen Wirtschaftlichkeitsberechnung tragen insbesondere die Einsparung von Leitungskosten, die Einsparung von Invest- und Wartungskosten durch den Wegfall des ADR, sowie weitere Einsparungsmöglichkeiten durch eine Reduzierungsmöglichkeit der eingesetzten RMCDEs als ständige Betriebskosten bei.

Um sowohl die analog zu dem Luftverkehrsaufkommen unterschiedliche Anzahl von Radar-Zielmeldungen, als auch die unterschiedliche Anzahl von einspeisenden Radaranlagen zu berücksichtigen, ist erfindungsgemäß vorgesehen, daß der Fehlerdetektor zur Ermittlung der aktuellen Datenlast selbstlernend ausgebildet ist. Damit wird bei hohem Verkehrsaufkommen der Verlust von Radardaten schneller erkannt und für das Wählverfahren in dem öffentlichen Datennetz eine erweiterte Zeitspanne geschaffen, um die insgesamt für Fehlererkennung und Bereitstellung der Radardaten an dem Netzwerk des Flugsicherungssystems einzuhaltenden fünf Sekunden zu erzielen.

Um die Radarquellen anwählen und die Radardaten annehmen zu können und um mit den Netzwerken, dem Netzwerkknoten RMCDE und dem PC-basierten Radardaten-Verarbeitungssystem kommunizieren zu können, weist die Workstation des Überwachungsrechners erfindungsgemäß verschiedene Schnittstellen (ISDN, Ethernet, FDDI, V 24) auf. Die Art und Anzahl der Schnittstellen ergibt sich aus den jeweiligen örtlichen Bedürfnissen.

Die erfindungsgemäße Vorrichtung ermöglicht es, in Weiterbildung des Erfindungsgedankens die Radardaten - auch ohne einen Störfall - zu unterschiedlichsten Anwendungen an berechtigte Nutzer zu übertragen, die Zugang zu einem öffentlichen Datennetz haben. Damit kann die Radar-Datenversorgung per Wählverfahren beliebigen Nutzern sowohl im nationalen als auch internationalen Bereich zur Verfügung gestellt werden.

Weitere Merkmale, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine schematische Darstellung der herkömmlichen ADR-Radareinspeisung und
- Fig. 2: eine entsprechende Radareinspeisung nach dem erfindungsgemäßen System ARTE.

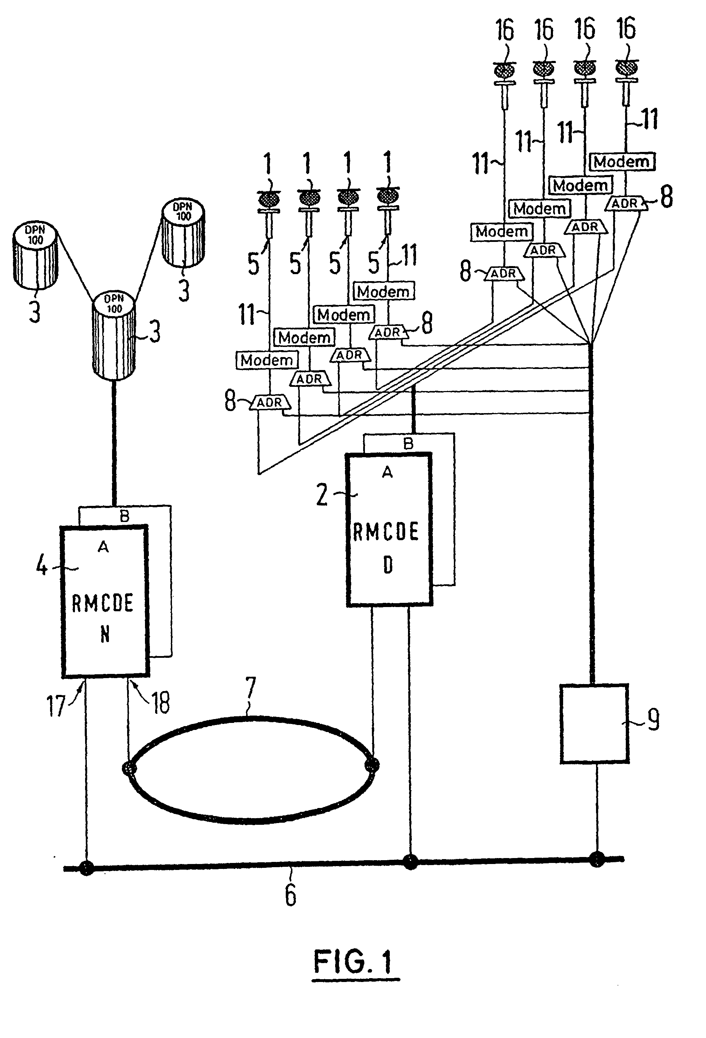

Die in Fig. 1 dargestellte Ausgangssituation (Stand der Technik) für die vorliegende Erfindung zeigt, daß die Versorgung einer Regionalstelle mit Radardaten seit der Einführung des RADNET im wesentlichen auf zwei Wegen erfolgt:

Die örtlichen Radaranlagen 1 werden über einen Netzwerkknoten RMCDE D (Direkt) 2 über die LANs in das (nicht dargestellte) Darstellungssystem eingespeist. Alle anderen Radaranlagen (Strecke) 3 werden über das RADNET zur Verfügung gestellt. Die Einspeisung in das Darstellungssystem erfolgt dabei über den Netzwerkknoten RMCDE N (Netz) 4. Die Netzwerkknoten RMCDE D 2 und RMCDE N 4 sind voneinander unabhängig. Über den RMCDE N 4 erfolgt die Verbindung in das RADNET, während alle direkt angeschlossenen Radaranlagen 1, die RADNET Einspeisepunkte 5 bilden, über den Netzwerkknoten RMCDE D 2 angeschlossen sind. Beide RMCDE's 2, 4 geben ihre Daten gleichzeitig auf zwei Netzwerke mit lokalem Ausdehnungsbereich (LAN - Local Area Network), insbesondere das Ethernet 6 und das FDDI 7 ab. Damit stehen alle Radardaten sowohl direkt als auch über das Netz gleichzeitig und voneinander unabhängig dem Online-System und einem Backup-System zur Verfügung. Quasi parallel hierzu werden alle direkt angeschlossenen Radaranlagen noch über sogenannte ADR's (All Purpose Data Replikator) 8 an das Backup-System angeschlossen. Bei Ausfall eines oder aller RMCDEs (RMCDE D und/oder N) erfolgt auf diesem Wege eine "Notversorgung" des Backup-Systems. Dabei werden jedoch nur die für die RADNET Einspeisung vorgesehenen Radaranlagen berücksichtigt. Eine Abdeckung des kompletten Luftraums einer Regionalstelle wird auf diesem Wege nicht erreicht.

Die Einspeisung der Radardaten in das Backup-System erfolgt über ein LAN in das als "TracView" bezeichnete, PC-basierte Radardatenverarbeitungssystem 9. Zur Sicherung der Radar-Überdeckung ist in Fig. 1 ein weiteres Radarnetz gezeigt, dessen Radaranlagen 16 über Leitungen 11 ebenso wie die Radaranlagen 1 an den Netzwerkknoten RMCDE D und über die ADR's und das Radardaten Verarbeitungssystem 9 an das Backup-System angeschlossen sind.

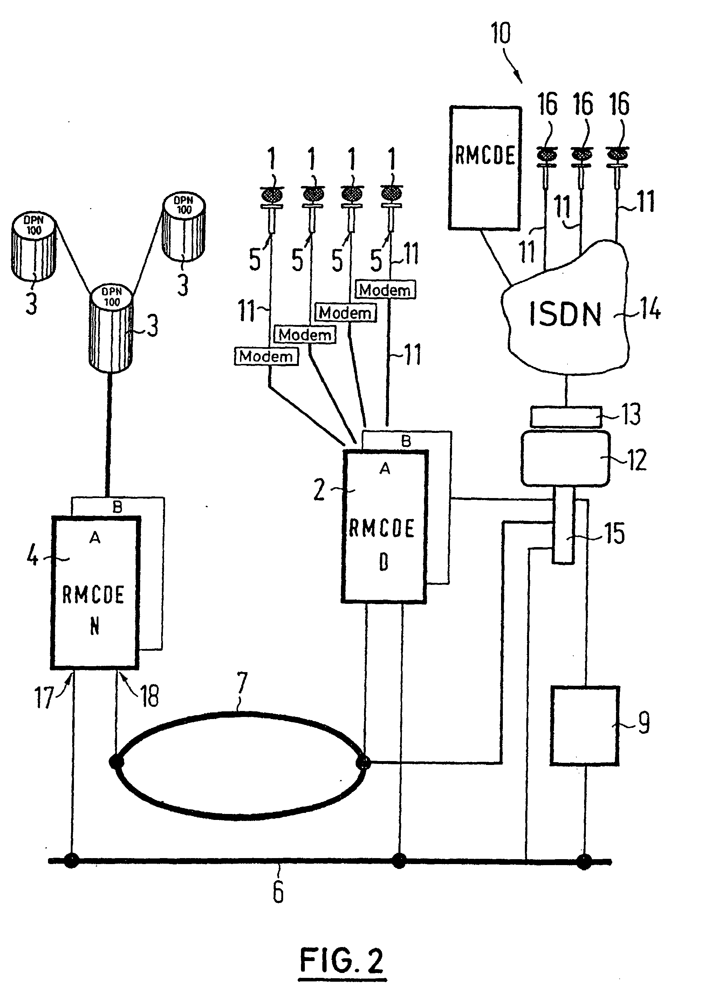

Das in Fig. 2 dargestellte erfindungsgemäße System ARTE unterscheidet sich von dem bekannten ADR-Radareinspeisungssystem gemäß Fig. 1 im wesentlichen dadurch, daß ein Überwachungsrechner 12 vorgesehen ist, der Standardschnittstellen 13 zum ISDN-Netzwerk 14 und Schnittstellen 15 zu den Netzwerken Ethernet 6 und FDDI 7 und ggf. eine V 24-Schnittstelle aufweist. Der Überwachungsrechner 12 ist damit in der Lage, mit den Netzwerken 6, 7 den RMCDE's 2, 4 und dem Radardaten Verarbeitungssystem 9 zu kommunizieren.

Der Überwachungsrechner 12 des Systems ARTE, der als PC-Workstation ausgebildet sein kann, erfaßt die Radardaten nach den Netzwerkknoten RMCDE 2 und 4 auf den systeminternen Netzwerken 6, 7 des Flugsicherungssystems, vergleicht in Perioden die Anzahl der eingehenden Zielmeldungen und wählt bei einem Ausfall der Radar-Zielmeldungen (RMCDE N und/oder RMCDE D Ausfall) eine Gegenstelle 10 im Netzwerk zur Versorgung der Kontrollzentralen mit Radardaten (RADNET), bzw. eine oder mehrere Radaranlagen 16 an, um das Flugsicherungssystem mit Radar-Zielmeldungen zu versorgen.

Dabei werden mittels eines selbstlernenden Fehler-Erkennungssystems an dem Netzwerk eines Flugsicherungssystems die Radarzielmeldungen in parametrisierbaren Zeitintervallen gemessen, um den Datenfluß abzubilden. Diese Werte werden über fünf Intervalle mit einstellbaren Parametern gespeichert und zu einem Mittelwert zusammengefaßt. Bei dem Eintreffen eines neuen Wertes wird jeweils der älteste Wert gelöscht (FIFO-Puffer - First in First out-Puffer). Dieses Verfahren ermöglicht ein selbstlernendes, kontinuierliches Erkennen der Datenlast und vermeidet die Überwertung antizyklischer Abläufe auf dem Netzwerk.

Der mittels des FIFO-Puffers gebildete Mittelwert wird als Eingangswert für eine Empfindlichkeitskurve genutzt, die ein Zeitfenster zum periodischen Vergleich der summierten Radar-Zielmeldungen für den Fehler-Detektor generiert. Mit dieser Funktion wird die minimalste zeitliche Betrachtungseinheit zu einer entscheidungsrelevanten Anzahl von Zielmeldungen eingestellt.

Der Fehler-Detektor des Überwachungsrechners 12 signalisiert den Totalausfall der Radar-Zielmeldungen in der vorgegebenen Zeiteinheit und leitet das Wählverfahren zu einer vordefinierten Radar-Datenquelle am öffentlichen Datennetz ein. Die auf diesem Weg empfangenen Radardaten werden über Schnittstellen, die durch den jeweiligen konstruktiven Stand des zu adaptierenden Flugsicherungssystems bestimmt werden, eingespeist.

Damit brauchen in einem Störfall die betrieblich notwendigen Radardaten nur dann über automatische Wählverbindungen zur Verfügung gestellt werden, wenn ein entsprechender Bedarf dazu besteht. Ansonsten müßten 24 Stunden pro Tag für einen möglicherweise nie auftretenden Eventualfall teure Standleitungen vorgehalten werden.

Die Anwahl der Radaranlagen sowie die Übertragung der Radardaten erfolgt über das ISDN-Netzwerk. Damit läßt sich eine komplette Radarüberdeckung innerhalb von Sekunden aufbauen und eine Wiederkehr der Radardarstellung innerhalb dieses kurzen Zeitraumes gewährleisten. Die systemimmanenten Redundanzen des ISDN-Netzwerkes garantieren dabei einen Übertragungsweg, dessen Ausfallsicherheit mit einer direkt geschalteten Leitung nicht erreicht werden kann. Bei einer derartigen Ersatzversorgung mit Radardaten werden die Daten der über ISDN angewählten Radaranlagen in einen PC aufgenommen und unter vollständiger Umgehung des Netzwerkknotens RMCDE sowohl in die Netzwerke Ethernet 6 und FDDI 7 als auch in das Radardaten-Verarbeitungssystem 9 eingespeist.

Im Fall des Ausfalles des RMCDE N 4 ist sichergestellt, daß die zur Radarüberdeckung erforderlichen Radaranlagen rechtzeitig über ISDN angewählt und die Radardaten dem Netzwerk zur Verfügung gestellt werden. Dazu werden der Ausgang 17 des RMCDE N 4 zum Ethernet 6 und der Ausgang 18 des RMCDE N 4 zum Netzwerk FDDI 7 von dem Überwachungsrechner 12 auf ausgegebene Radardaten überwacht. Die Überwachungslogik überprüft ständig den Radarfluß aller über Netz angelieferten Radardaten. Sobald der Datenfluß (Anzahl der Zielmeldungen pro Zeiteinheit) aufhört, wird dies als Kriterium für einen ausgefallenen Netzwerkknoten RMCDE N bewertet. Dabei kann mit Hilfe einer selbstlernenden Überwachungslogik die unterschiedliche Verkehrsbelastung des Luftraums bei Tag und bei Nacht - und den damit veränderten Zielmeldungen pro Zeiteinheit - kontinuierlich gefolgt werden. Zweckmäßigerweise erfolgt die Erkennung der Datenlast mittels des oben beschriebenen FIFO-Puffers. Ein derartiges selbstlernendes Überwachungsverfahren gewährleistet eine sichere Fehlererkennung.

Wird von der Überwachungslogik ein Ausfall des Netzwerkknotens RMCDE N oder einer seiner Teilkomponenten am FDDI/Ethernet-Ausgang erkannt, wird der Überwachungsrechner 12 den Aufbau der ISDN-Wählverbindungen für alle ausgefallenen Radaranlagen starten. Die Fehlererkennung erfolgt in der Regel innerhalb von einer Sekunde. Die Fehlerkennung und Ersatzschaltung zusammen können damit innerhalb von fünf Sekunden erfolgen, innerhalb derer die Radarversorgung nach einem Systemausfall wiederherzustellen ist.

Für die Dauer dieses RMCDE N-Ausfalls werden die Ersatzradardaten unter Verwendung von ARTE über ISDN-Wählverbindungen in das Netzwerk eingespeist. Dabei wird beispielsweise das Radardatenverarbeitungssystem außer von den direkt angeschlossenen Radaranlagen zusätzlich von den über ISDN-Wählverbindungen geschalteten Radaranlagen 10 (RADNET Ersatz) mit Radardaten versorgt.

Im Fall eines RMCDE D-Ausfalls werden die direkt angeschlossenen Radaranlagen oder ein/mehrere externe RMCDEs angewählt und die Daten vom Überwachungsrechner 12 dem FDDI 6 und Ethernet 7 - Netzwerk zur Verfügung gestellt. Die Überwachung der Ausgänge des RMCDE D erfolgt prinzipiell wie beim RMCDE N, wobei lediglich andere Radarquellen angewählt werden.

Das erfindungsgemäße System ARTE ermöglicht die Übertragung von Daten (z.B. Radardaten) zu unterschiedlichsten Anwendungen an berechtigte Nutzer im nationalen und internationalen Bereich, die Zugang zu einem öffentlichen Datennetz haben.

### Bezugszeichenliste:

- 1: Örtliche Radaranlage ASR (Airport Surveillance Radar) (Rundsichtradar am Flughafen)
- 2: Netzwerkknoten RMCDE D (Direkt)
- 3: Radaranlagen (Strecke)
- 4: Netzwerkknoten RMCDE N (Netz)
- 5: RADNET (Radar Data Network) - Einspeisepunkt
- 6: Netzwerk Ethernet
- 7: Netzwerk FDDI
- 8: ADR (All-Purpose-Data-Replicator)
- 9: (PC-basiertes) Radardaten-Verarbeitungssystem ("TracView")
- 10: weiteres Radarnetz (ARTE Gegenstelle)
- 11: Leitungen
- 12: Überwachungsrechner des Systems ARTE (Automatic Radardata Transmission Equipment)
- 13: Schnittstelle
- 14: ISDN-Netzwerk
- 15: Schnittstellen
- 16: Radaranlagen
- 17: Ausgang von 4 zu 6
- 18: Ausgang von 4 zu 7

## Patentansprüche

1. Verfahren zur Radar-Datenversorgung von Flugsicherungssystemen oder dgl., deren Kontrollzentralen (9) über ein Netzwerk (6,7) mit Radardaten versorgt werden, wobei die Einspeisung der Radardaten in das Netzwerk sowie die Auskopplung der Radardaten für die Flugsicherungssysteme aus dem Netzwerk über Netzwerkknoten (2,4) erfolgt und wobei die Radardaten über Netzwerke zu integrierten Betriebssystemen und ggf. einem Backup-System weitergeleitet werden, **dadurch gekennzeichnet,**
- **daß** an dem Netzwerk eines Flugsicherungssystems die Radardaten erfaßt Radar-Zielmel-dungen in Zeitintervallen mit einstellbaren Parametern gezählt werden,
- **daß** aus der Anzahl der Radar-Zielmeldungen pro Zeitintervall ein Datenfluß abgebildet wird,
- **daß** die Meßwerte des Datenflusses in einen FIFO-Puffer geschoben und über mehrere Intervalle gespeichert und zu einem Mittelwert zusammengefaßt werden,
- **daß** beim Eintreffen eines neuen Datenfluß-Meßwertes jeweils der älteste Wert gelöscht wird,
- **daß** der mittels des FIFO-Puffers gebildete Mittelwert der Radar-Zielmeldungen als Eingangswert für eine Empfindlichkeitskurve benutzt wird, die als Ausgangswert ein Zeitfenster zum periodischen Vergleich der summierten Radar-Zielmeldungen für einen Fehler-Detektor (12) generiert,
- **daß** der Fehler-Detektor einen Fehlerfall, insbesondere einen Totalausfall der Radar-Zielmeldungen in dem vorgegebenen Zeitfenster signalisiert und ein Wählverfahren zu einer vordefinierten Radar-Datenquelle (16) an einem terrestrischen, satellitengestützen oder dgl. öffentlichen Datennetz (14) einleitet und
- **daß** die auf diesem Wege empfangenen Ersatz- Radardaten über Schnittstellen (13,15) in das jeweilige Flugsicherungssystem oder dgl. eingespeist werden.

2. Verfahren nach Anspruch 1, **dadurch gekennzeichnet, daß** die Meßwerte über fünf Intervalle gespeichert werden.

3. Verfahren nach Anspruch 2, **dadurch gekennzeichnet, daß** die Anwahl der Radaranlagen und die Übertragung der Radardaten über ISDN oder ein sonstiges, insbesondere satellitengestütztes Datennetz erfolgt.

4. Verfahren nach Anspruch 3, **dadurch gekennzeichnet, daß** die Daten der über ISDN oder ein sonstiges Datennetz angewählten Radaranlagen in einen Überwachungsrechner angenommen und - unter vollständiger Umgehung der Netzwerkknoten - sowohl in die Netzwerke, insbesondere Ethernet und FDDI, als auch in das Backup-System eingespeist werden.

5. Verfahren nach Anspruch 4, **dadurch gekennzeichnet, daß** die Überwachungslogik des Überwachungsrechners ständig den Radardatenfluß überprüft, daß die Überwachungslogik im Fall, daß der Datenfluß - Anzahl der Zielmeldungen pro Zeiteinheit - unterbrochen wird, dies als Kriterium für einen ausgefallenen Netzwerkknoten bewertet und den Aufbau der Wählverbindungen über ISDN oder ein sonstiges Datennetz für alle ausgefallenen Radarinformationen startet.

6. Verfahren nach Anspruch 5, wobei ein oder mehrere unabhängig voneinander arbeitende Netzwerkknoten vorgesehen sind, **dadurch gekennzeichnet, daß** für die Dauer eines Netzwerkknoten-Totalausfalls oder - Teilausfalls die nachgeschalteten Radardarstellungssysteme über Wählverbindungen von externen Netzwerkknoten oder Radaranlagen mit Ersatz-Radardaten versorgt werden.

7. Verfahren nach Anspruch 6, **dadurch gekennzeichnet, daß** für die Dauer eines Netzwerkknoten-Ausfalls die direkt angeschlossenen Radaranlagen oder ein externer Netzwerkknoten angewählt und die Radardaten vom Überwachungsrechner in die Netzwerke, insbesondere Intemet und FDDI, über Schnittstellen eingespeist werden.

8. Verfahren nach einem der vorhergehenden Ansprüche, **dadurch gekennzeichnet, daß** der Datenfluß nur in einem bestimmten Zeitintervall überwacht wird.

9. Vorrichtung zur Durchführung des Verfahrens nach einem oder mehreren der Ansprüche 1 bis 9, wobei ein Netzwerk zur Versorgung von Kontrollzentralen mit Radardaten vorgesehen ist, in das über Netzwerkknoten die Radardaten der Radaranlagen eingespeist und die Radardaten für die Flugsicherungssysteme ausgekoppelt werden, und wobei die Radardaten über Netzwerke (Ethernet, FDDI) zu den integrierten Betriebssystemen und ggf. einem Backup-System weitergeleitet werden, **gekennzeichnet durch** ein Fehlererkennungssystem, das aus einem Überwachungsrechner (12) besteht, der die Radardaten nach dem Netzwerkknoten (2) auf den systeminternen Netzwerken des Flugsicherungssystems erfaßt, der In Perioden die Anzahl der eingehenden Zielmeldungen vergleicht, der einen mittels FIFO-Puffer gebildeten Mittelwert der Radardaten als Eingangswert für eine Empfindlichkeitskurve verwendet, die ein Zeitfenster zum periodischen Vergleich der summierten Radardaten für einen Fehler-Detektor generiert, der im Fehlerfall, insbesondere bei einem völligen Ausfall der Radar-Zielmeldungen, eine Gegenstelle (10) am Netzwerk bzw. eine oder mehrere Radaranlagen (16) über ISDN (14) oder ein sonstiges Datennetz anwählt und dem Flugsicherungssystem zusätzlich benötigte Radardaten, insbesondere Radar-Zielmeldungen, zuschaltet.

10. Vorrichtung nach Anspruch 9, **dadurch gekennzeichnet, daß** der Fehlerdetektor zur Ermittlung der aktuellen Datenlast selbstlernend ausgebildet ist.

11. Vorrichtung nach Anspruch 9, **dadurch gekennzeichnet, daß** der Überwachungsrechner (12) verschiedene Schnittstellen, insbesondere eine ISDN-Schnittstelle (13), Ethemet- und/oder FDDI-Schnittstellen (15) und ggf. eine V 24-Schnittstelle aufweist.

12. Vorrichtung nach Anspruch 9, **dadurch gekennzeichnet, daß** die Daten, insbesondere Radardaten, - auch ohne einen Störfall - zu unterschiedlichsten Anwendungen an berechtigte Nutzer übertragbar sind, die Zugang zu einem öffentlichen Datennetz haben.

## Claims

1. Method for supplying radar data to air traffic control systems or the like, with the control centers (9) of such traffic control systems being supplied with radar data via a network (6, 7), whereby the feed of the radar data into the network as well as the uncoupling of the radar data for the air traffic control systems from the network take place via network junctions (2, 4), and whereby the radar data are transmitted via networks to integrated operating systems, and, if need be, to a backup-system, **characterized in that**
- the radar data are collected and the radar target messages are counted on the network of an air traffic control system in time intervals with adjustable parameters,
- a data flow is reproduced based on the number of radar target messages per time interval,
- the measured values of the data flow are put into a FIFO-buffer and stored over several intervals and are combined into an average value,
- when a new data flow value is received, the respectively oldest value is erased,
- the average value of the radar target messages formed by means of a FIFO-buffer is used as an initial value for a sensitivity curve generating a time window as a basic value for the periodic comparison of the added radar target messages for an error detector (12),
- the error detector signalizes a failure, especially a total failure of the radar target messages in the predetermined time window and initiates a selection mode for accessing a predefined radar data source (16) on a terrestrial, satellite-supported or the like, public data network (14), and
- the substitute radar data retrieved in said way are fed into the respective air traffic control system or the like via interfaces (13,15).

2. Method according to claim 1, **characterized in that** the measured values are stored over five intervals.

3. Method according to claim 2, **characterized in that** the selection of the radar stations and the transmission of the radar data take place via ISDN or another data network, in particular a satellite-supported data network.

4. Method according to claim 3, **characterized in that** the data of the radar stations selected by the ISDN or another data network are received in a monitoring computer and fed into both networks, in particular Ethernet and FDDI networks, and into the backup system, with complete circumvention of the network junctions.

5. Method according to claim 4, **characterized in that** the monitoring logic of the monitoring computer continually checks the radar data flow, that the monitoring logic, in the event the flow of data - number of target messages per time unit - is interrupted, interprets this as a criterion for a failed network junction and initiates the build-up of the selected connections - via the ISDN or another data network - for all failed radar information.

6. Method according to claim 5, whereby provision is made for one or a plurality of network junctions operating independently from each other,
**characterized in that** over the duration of a total or partial failure of a network junction, the radar reproduction systems connected downstream are supplied with substitute radar data via switched connections to external network junctions or radar stations.

7. Method according to claim 6, **characterized in that** over the duration of a network junction failure, the directly connected radar stations or an external network junction are selected, and the radar data are fed by the monitoring computer into the networks, in particular into the Internet and FDDI networks, via interfaces.

8. Method according to any one of the preceding claims, **characterized in that** the flow of data is monitored only in a defined time interval.

9. Device for carrying out the method according to any one or several of the claims 1 to 9, whereby provision is made for a network for supplying control centers with radar data, into which network the radar data of the radar stations are fed via network junctions, and from which the radar data for the air traffic control systems are uncoupled, and whereby the radar data are transmitted to the integrated operating systems and, if need be, to a backup system via networks (Ethernet, FDDI), **characterized by** an error detection system consisting of a monitoring computer (12), which acquires the radar data downstream of the network junction (2) on the system-internal networks of the air traffic control system, which compares the number of incoming target messages in periods, which uses an average value of the radar data formed by means of the FIFO-buffer as an input value for a sensitivity curve, which generates a time window for periodic comparison of the added radar data for an error detector, which, in the event of an error, particularly in the event of a total failure of the radar target messages, selects a remote station (10) of the network, or one or several radar stations (16) via ISDN (14) or some other data network and switches additionally required radar data, in particular radar target messages, to the air traffic control system.

10. Device according to claim 9, **characterized in that** the error detector is designed self-learning for determining the actual data load.

11. Device according to claim 9, **characterized in that** the monitoring computer (12) has different interfaces, in particular an ISDN-interface (13), Ethernet- and/or FDDI-interfaces (15) and, if need be, a V 24-interface.

12. Device according to claim 9, **characterized in that** the data, in particular radar data, can be transmitted - also without an event of disturbance - for all sorts of different applications to authorized users having access to a public data network.

## Revendications

1. Procédé pour l'approvisionnement en données radar de systèmes de contrôle du trafic aérien ou similaire, dont les centrales de contrôle (9) sont approvisionnées en données radar à travers un réseau (6, 7), l'injection desdites données radar dans ledit réseau ainsi que le découplage desdites données radars dudit réseau pour lesdits systèmes de contrôle du trafic aérien s'effectuant à travers des noeuds de réseau (2, 4) et lesdites données radar étant transmises à travers des réseaux à des systèmes d'exploitation intégrés et le cas échéant à un système de sauvegarde, **caractérisé en ce que**
- lesdites données radar sont collectées et que des messages de cible radar sont comptés en intervalles temporels à paramètres ajustables au niveau du réseau d'un système de contrôle du trafic aérien,
- qu'un courant de données est reproduit à partir du nombre desdits messages de cible radar par intervalle temporel,
- que les valeurs mesurées dudit courant de données sont mises dans un tampon FIFO et sauvegardées sur plusieurs intervalles et regroupées en une valeur moyenne,
- qu'au moment de l'arrivée d'une nouvelle valeur mesurée dudit courant de données la valeur la plus ancienne est effacée respectivement,
- que ladite valeur moyenne desdits messages de cible radar obtenue grâce audit tampon FIFO est utilisée comme valeur d'entrée pour une courbe de sensibilité qui génère comme valeur de sortie une fenêtre temporelle pour la comparaison périodique desdits messages de cible radar additionnés pour un détecteur d'erreurs (12),
- que ledit détecteur d'erreurs signale un cas d'erreur, en particulier une défaillance totale desdits messages de cible radar, dans ladite fenêtre temporelle prédéterminée et qu'il amorce une procédure de sélection envers une source de données radars (16) prédéfinie au niveau d'un réseau de données publiques (14) terrestre, soutenu par satellites ou similaire et
- que les données radar de remplacement reçues par cette voie sont injectées à travers des interfaces (13, 15) dans ledit système de contrôle du trafic aérien ou similaire respectif.

2. Procédé selon la revendication 1, **caractérisé en ce que** lesdites valeurs mesurées sont enregistrées sur cinq intervalles.

3. Procédé selon la revendication 2, **caractérisé en ce que** la sélection desdites installations radar et la transmission desdites données radar s'effectuent à travers l'ISDN ou un autre réseau de données, en particulier soutenu par satellites.

4. Procédé selon la revendication 3, **caractérisé en ce que** les données des installations radar sélectionnées par ISDN ou un autre réseau de données sont acceptées par un ordinateur de surveillance et sont injectées autant dans lesdits réseaux, en particulier Ethernet et FDDI, qu'aussi dans ledit système de sauvegarde, ceci sous dérivation complète desdits noeuds de réseau.

5. Procédé selon la revendication 4, **caractérisé en ce que** la logique de surveillance dudit ordinateur de surveillance contrôle constamment ledit courant de données radar, que ladite logique de surveillance, dans le cas où ledit courant de données - nombre de messages de cible par unité de temps - est interrompu, juge ceci comme critère pour un noeud de réseau défaillant et amorce la constitution desdites connections de sélection par ISDN ou autre réseau de données pour toutes les informations radar défaillantes.

6. Procédé selon la revendication 5, un ou plusieurs noeuds de réseau travaillant de façon indépendante l'un de l'autre étant prévus, **caractérisé en ce que** pendant la durée d'une défaillance totale ou partielle d'un noeud de réseau les systèmes de représentation radar placés en aval sont approvisionnés en données radar de remplacement par des noeuds de réseau ou des installations radar externes à travers des connections de sélection.

7. Procédé selon la revendication 6, **caractérisé en ce que** pendant la durée d'une défaillance d'un noeud de réseau lesdites installations radar directement connectées ou un noeud de réseau externe sont sélectionnés et que lesdites données radar sont injectées par l'ordinateur de surveillance à travers des interfaces dans les réseaux, en particulier Internet et FDDI.

8. Procédé selon une des revendications précédentes, **caractérisé en ce que** ledit courant de données est uniquement surveillé dans un certain intervalle temporel.

9. Dispositif pour la mise en oeuvre du procédé selon une ou plusieurs des revendications 1 à 9, un réseau pour l'approvisionnement de centrales de contrôle en données radar étant prévu, dans lequel sont injectées à travers des noeuds de réseau lesdites données radar desdites installations radar et dans lequel sont découplées lesdites données radar pour lesdits systèmes de contrôle du trafic aérien, et lesdites données radar étant transmises aux systèmes d'exploitation intégrés et le cas échéant à un système de sauvegarde à travers des réseaux (Ethernet, FDDI), **caractérisé par** un système de reconnaissance d'erreurs qui est constitué d'un ordinateur de surveillance (12) collectant lesdites données radar après ledit noeud de réseau (2) sur lesdits réseaux internes dudit système de contrôle du trafic aérien, comparant périodiquement le nombre de messages de cible rentrants, utilisant une valeur moyenne desdites données radar obtenue grâce un tampon FIFO comme valeur d'entrée pour une courbe de sensibilité qui génère une fenêtre temporelle pour la comparaison périodique desdites données radar additionnées pour un détecteur d'erreurs, sélectionnant en cas d'erreur, en particulier en cas de défaillance totale desdits messages de cible radar, un poste terminal (10) du réseau ou respectivement une ou plusieurs installations radar (16) par ISDN (14) ou un autre réseau de données et mettant en circuit en supplément des données radar nécessaire, en particulier des messages de cible radar, pour ledit système de contrôle du trafic aérien.

10. Dispositif selon la revendication 9, **caractérisé en ce que** ledit détecteur d'erreurs est capable d'auto-apprentissage pour la déduction de la charge de données actuelle.

11. Dispositif selon la revendication 9, **caractérisé en ce que** l'ordinateur de surveillance (12) dispose de diverses interfaces, en particulier d'une interface ISDN (13), d'interfaces Ethernet et/ou FDDI (15) et le cas échéant d'une interface V-24.

12. Dispositif selon la revendication 9, **caractérisé en ce que** lesdites données, en particulier des données radar, sont transmissibles pour des applications variées à des utilisateurs autorisés ayant accès à un réseau public, ceci aussi sans cas de défaillance.
